Europäisches Patentamt

European Patent Office

Office européen des brevets

(19)

(11) Publication number: **0 009 921**
**B1**

(12)            **EUROPEAN PATENT SPECIFICATION**

(45) Date of publication of patent specification: **26.01.83**

(51) Int. Cl.³: **B 60 B 33/00**

(21) Application number: **79301985.2**

(22) Date of filing: **25.09.79**

(54) Wheel means for container handling.

(30) Priority: **05.10.78 AU 6246/78**
**06.04.79 AU 8344/79**
**15.06.79 AU 9227/79**

(43) Date of publication of application:
**16.04.80 Bulletin 80/8**

(45) Publication of the grant of the patent:
**26.01.83 Bulletin 83/4**

(84) Designated Contracting States:
**DE FR GB IT**

(56) References cited:
**FR - A - 1 320 800**
**FR - A - 1 481 896**
**FR - A - 2 191 630**
**US - A - 1 781 732**
**US - A - 1 895 882**
**US - A - 2 754 421**
**US - A - 2 772 889**
**US - A - 3 463 505**
**US - A - 3 473 819**
**US - A - 3 593 387**
**US - A - 3 667 085**
**US - A - 4 090 722**

(73) Proprietor: Hannan, Garnet Marshall Underwood
Bettina Lodge
Jerilderie Street Jerilderie, N.S.W., 2716 (AU)

(72) Inventor: Hannan, Garnet Marshall Underwood
Bettina Lodge
Jerilderie Street Jerilderie, N.S.W., 2716 (AU)

(74) Representative: Campbell, Geoffrey Duncan
Lethaby et al,
BARKER, BRETTELL & DUNCAN 138 Hagley Road
Edgbaston Birmingham, B16 9PW (GB)

Wheel means for container handling

The present invention relates to handling of containers, particularly the moving of containers from one location to another, for example in a warehouse once they are unloaded from a transporter such as a truck or a railway flat car.

Containers are increasingly coming into use for the transport of materials. Such containers conventionally comprise a plurality of apertures adjacent each corner. Typically, the containers have a corner block at each corner, each corner block comprising an under aperture, an end aperture and a side aperture. The apertures in the corner blocks are normally used for such purposes as attachment to the transporter during transportation and for attachment of crane hooks when the containers are being lifted.

It has already been proposed to attach wheels to the side apertures in order to facilitate movement of the container (US-A-3 473 819 and 4 090 722). Each wheel rotates on an axle which is mounted perpendicular to one side of a vertical plate. The opposite side of the plate is attached to a device which is designed to be located and locked in the side aperture.

Accordingly it is already known to provide a wheel means for mounting with a corner aperture of a container, comprising a plate having a ground engaging means coupled to one side thereof and a locating and locking device attached to the opposite side thereof.

What is now proposed is that the wheel means should be adapted for attachment to an underside aperture of the container.

According to one proposal, the wheel means is characterised in that in the operative position the plate forms a substantially horizontal base plate, and said locating and locking device comprises a lug having a substantially horizontal portion for location in an underside aperture of the container, and an upright portion having an opening therein for receiving a pin inserted through a side or end aperture of the container to lock the lug in the underside aperture.

According to another proposal, the wheel means is characterised in that in the operative position the plate forms a substantially horizontal base plate, and said locating and locking device comprises a locating plate for location in an underside aperture of the container and mounted for rotation relative to the base plate, and a locking plate fixed relative to the base plate such that said base plate may be rotated to cause the locking plate to rotate relative to the locating plate to lock the locating and locking device in the underside aperture.

In use, a wheel means of the present invention is attached to each corner of the container and the container can be moved around at will such as by means of a fork-lift truck.

The ground engaging means may be a plurality of rollers. The rollers may have a caterpillar-like track or belt thereabout or may engage the ground themselves.

Alternatively, the ground engaging means may be wheels. Preferably, the ground engaging means is swivellable relative to the locating and locking device.

I have found that when the ground engaging means is in the form of the plurality of rollers, the weight of the containers when supported by the wheel means, is better distributed and causes less fatigue in the wheel means. Hence, this embodiment is more suitable for moving heavy containers.

The present invention will now be described by way of example, with reference to the accompanying drawings, in which:—

Figure 1 is a front elevation of a wheel means in accordance with a first embodiment of the present invention;

Figure 2 is a plan view of the wheel means of Figure 1;

Figure 3 is a side elevation of the wheel means of Figure 1;

Figures 4A and 4B are two schematic views of part of the wheel means of Figure 1 in locked and unlocked positions;

Figure 5 is a schematic perspective view of a ramped container supporting means for loading and unloading a container;

Figure 6 is a side view of a second embodiment of the invention;

Figure 7 is a perspective view of a third embodiment of the invention;

Figure 8 is a side view of the embodiment of Figure 7;

Figure 9 is a top view of the embodiment of Figure 7; and

Figure 10 is a front view of the embodiment of Figure 7.

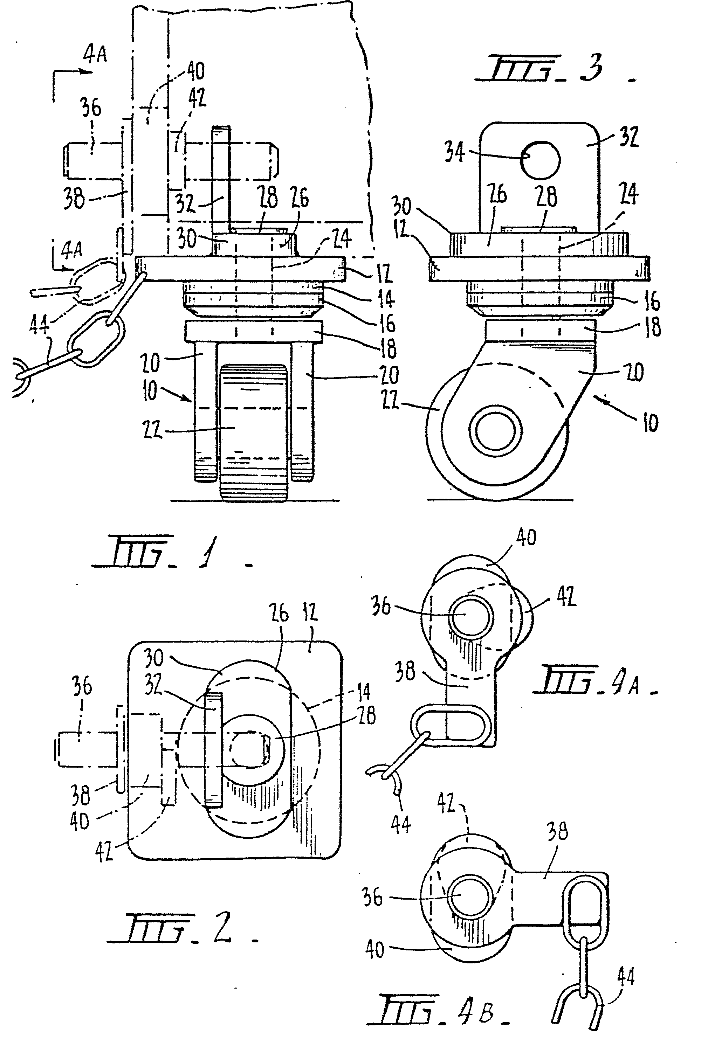

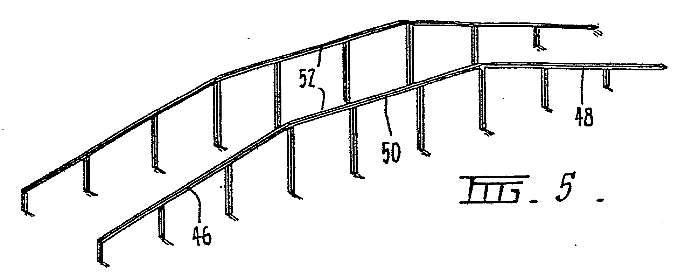

In Figures 1 to 4 there is shown a wheel means 10 comprising a base plate 12 having a circular projection 14 attached thereto. A cup member 16 is rotatably mounted on the circular projection 14. Suitable bearing means such as a cone and bearing race is located between the projection 14 and cup member 16.

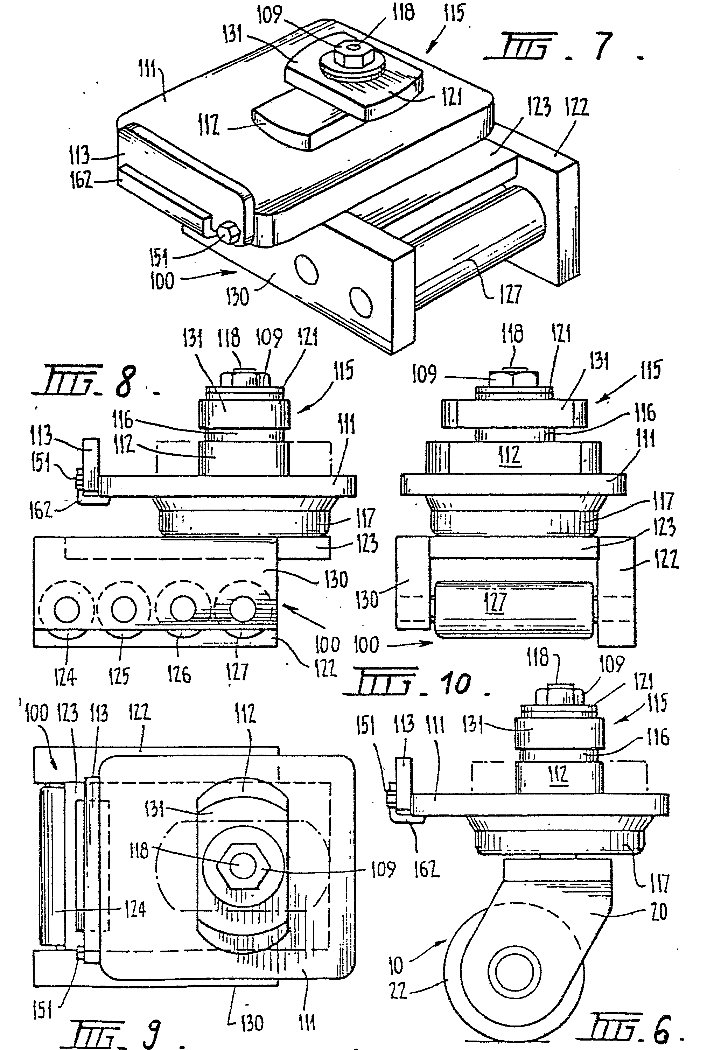

The cup member 16 is attached such as by welding to a mounting plate 18. A pair of parallel flanges 20 extend from the mounting plate 18. The flanges 20 extend laterally away from the mounting plate 18 as can best be seen in Figure 3 and have mounted between them a wheel 22.

A rod 24 (seen in phantom in Figures 1 and 3) is secured such as by welding to the mounting plate 18 and extends through the cup member 16, circular projection 14, base plate 12 and a lug 26 on the upper side of the base plate 12. The end of the rod 24 adjacent the lug 26 is threaded and threadedly engaged with a threaded flanged member 28. The flanged member 28 is secured in place by a suitable means such as a plurality of screws (not shown) engaging in the lug 26. The flanged member 28 holds the assembly together by retaining the rod 24 in place. The wheel mounting assembly just described enables the wheel to be rotated in relation to the base plate and the lateral displacement of the flanges 20 gives the wheel the same movement characteristics as that of a castor wheel.

The lug 26 is L-shaped and comprises a horizontal portion 30 attached such as by welding to the base plate 12 and a vertical portion 32 extending from one extremity of the horizontal portion 30. The vertical portion 32 contains a circular aperture 34.

In use, the lug 26 is inserted into an underside corner aperture of a container such that the horizontal portion 30 closely engages with the aperture. When this is done at all four corners the container can rest on the base plates 12 of the wheel means 10 and be readily moved around. The castor action of the wheels enables the container to be readily steered into any desired location.

Before the container is lowered to rest on the base plates 12 it is preferred to retain the wheel means 10 in place by means of a pin 36 engaging with the aperture 34.

Conveniently, the pin 36 is arranged to be inserted in a side or end corner aperture of the container to engage with the aperture 34. Thus, the pin 36 has mounted thereon a limit plate 38 for limiting the extent to which the pin 36 can be inserted into the corner aperture, a freely mounted elongated locating boss 40 for engagement with the corner aperture and a locking projection 42.

The limit plate 38 is attached to the base plate 12 by a suitable flexible coupling means such as a chain 44, although a pivot joint could be employed instead. In use, the pin 36 is inserted in the corner aperture with the limit plate 38 in the horizontal position to enable the locking projection to be inserted (see Figure 4B). The pin 36 engages the aperture 34 and the locating boss 40 engages with the aperture. The limit plate is then rotated through about 90° to cause the locking projection 42 to rotate to a locking position whereby the pin 36 cannot be withdrawn (see Figure 4A).

Preferably, the wheel means 10 are applied by the means to be described hereinafter. A side wheel is releasably locked into engagement with each side corner aperture of the container whilst on, for example, a truck. Suitable side wheels are described in Australian Patent Application Nos. 12215/76 and 20169/76.

Next the truck and container are backed towards a ramped supporting means as shown in Figure 5. This comprises a ramp surface 46 at one end and a ramp surface 48 at the other end with an intervening level portion 50. The supporting means comprises a pair of spaced apart parallel rail members 52.

The side wheels engage the rail members 52 and ride up ramp 46. Backing is continued until the container is on the level portion 50. Initially, movement is imparted to the container from the truck by means of twist locks on the tray of the truck which are normally used for keeping the container in place during transportation. As the container rides up the ramp 46 movement continues to be imparted through the cab rack of the truck if it has one or suitably located vertical bars.

The ramp 46 may extend to floor level but need not do so. It only has to be of sufficient height to engage with the flanged wheels while the container is on the truck. The ramp 48 however extends to floor level. The container can be backed down the ramp 48 as is so that it rides on the side wheels fitted to the side apertures. Preferably, however, wheel means 10 as described above are fitted into the four underside corner apertures and held in position as described above when the container is on the level portion 50.

Reloading takes place by the reverse sequence of operations. The side wheels and wheel means 10 can be removed if desired. The wheel means 10 can be removed by lifting each end of the container in turn such as by a fork-lift truck.

Referring now to Figures 6 to 10 which show alternative embodiments of the invention, Figure 6 shows an embodiment in which the locking and locating device is identical to that of Figures 7 to 10 and includes the wheel 22 of Figures 1 to 3.

In Figures 6 to 10, a base plate 111 has a taper bearing 117 secured to the underside thereof. A locking and locating device 115 comprises a locating plate 112 which is free to rotate about a sleeve 116 having a shaft 118 therein and a locking plate 131. The shaft 118 terminates in taper bearings 117 so that plate 111 is swingable relative to wheel 22 (Figure 6) or a roller assembly 100 (Figures 7 to 10). The upper end of the shaft 118 is held in the sleeve 116 by a nut 109 and washer 121. The plate 111 has a lever 113 which is rotatable in a vertical plane about pivot 151 out of a holder 162. The lever 113 acts as a handle for rotating the plate 111 and locking and engaging device 115 to lock the same in an aperture of a container. The locking plate 131 which is fixed on sleeve 116 is also fixed relative to the plate 111. Hence, when locking device 115 is located in an aperture and lever 113 is pivoted out of holder 162, the lever 113 may be used to rotate plate 111 so that the locating plate 112 is held captive in the corner aperture by rotating relative to the plate 111 and the locking plate 131 is rotated with the base plate 111 and is thereby held captive in the corner block in the aperture of the container. It should be noted that when the device 115 is positioned in the aperture, the plates 112 and 131 are aligned. When the plate 111 is rotated, the locating plate 112 rotates relative to the shaft 116 as the plate is rotated and the plate 131 remains fixed relative to the shaft so that the plates 112 and 131 take up the position shown in Figures 7 and 9.

Fixed to bearing 117 is the roller assembly 100 which comprises two flanges 130 and 122 (Figures 7 to 10) and flanges 20 (Figure 6) are separated by an upper plate 123. The plate 123 is larger in Figures 7 to 10 because the length of the rollers are, of course, greater than that of the wheel 22. Rollers 124 and 127 are supported between the flanges 130 and 122.

The rollers may have a caterpillar track or belt (not shown) thereabouts of alternatively, may project down beyond flanges 122 and 130 so that the rollers themselves contact the ground.

The rollers distribute the weight of the containers more than a single wheel and result in less fatigue in the wheel means.

Of course, it will be clear that the wheel means of Figures 6 to 10 can be used with the loading and unloading system of Figure 5.

These embodiments of the present invention provide a device which will allow containers to be moved in a warehouse as well as unloaded from a truck or the like.

## Claims

1. A wheel means (10) for mounting with a corner aperture of a container, comprising a plate (12) having a ground engaging means (22) coupled to one side thereof and a locating and locking device (26) attached to the opposite side thereof, characterised in that in the operative position the plate (12) forms a substantially horizontal base plate, and said locating and locking device (26) comprises a lug (26) having a substantially horizontal portion (30) for location in an underside aperture of the container, and an upright portion (32) having an opening (34) therein for receiving a pin (36) inserted through a side or end aperture of the container to lock the lug (26) in the underside aperture.

2. A wheel means (10) for mounting with a corner aperture of a container, comprising a plate (111) having a ground engaging means (22, 100) coupled to one side thereof and a locating and locking device (115) attached to the opposite side thereof, characterised in that in the operative position the plate (111) forms a substantially horizontal base plate, and said locating and locking device (115) comprises a locating plate (112) for location in an underside aperture of the container and mounted for rotation relative to the base plate (111), and a locking plate (131) fixed relative to the base plate (111) such that said base plate (111) may be rotated to cause the locking plate (131) to rotate relative to the locating plate (112) to lock the locating and locking device (115) in the underside aperture.

3. A wheel means according to Claim 1 or Claim 2, wherein said ground engaging means (22, 100) is swivellable relative to the locating and locking device (26, 115).

4. A wheel means according to Claim 3, wherein the ground engaging means (22, 100) is coupled to the base plate (12, 111) by a rotatable shaft (24, 118) which passes through the base plate (12, 111).

5. A wheel means according to Claim 4, wherein the shaft (24, 118) is mounted in bearing means (16, 117) disposed between the base plate (12, 111) and the ground engaging means (22, 100).

6. A wheel means according to any one of the preceding claims, wherein the ground engaging means comprises a wheel (22).

7. A wheel means according to Claim 6, wherein the wheel (22) is mounted on an axle between a pair of flanges (20) connected together by a mounting plate (18) which is coupled to the base plate (12, 111).

8. A wheel means according to any one of Claims 1 to 5, wherein the ground engaging means comprises a roller assembly (100).

9. A wheel means according to Claim 8, wherein the roller assembly comprises a plurality of rollers (124 to 127) mounted between a pair of flanges (122, 130) and which flanges (122, 130) are coupled to the base plate (111) by an upper plate (123).

10. A wheel means according to Claim 9, wherein the rollers (124 to 127) are provided with a caterpillar track.

## Revendications

1. Dispositif de roulement (10) pour son montage dans une ouverture d'angle d'un conteneur, comprenant un plateau (12) ayant un moyen au contact du sol (22) accouplé à une face de ce plateau et un dispositif de positionnement et de verrouillage (26) attaché à sa face opposée, caractérisé en ce que, dans la position de fonctionnement, le plateau (12) forme un plateau de base pratiquement horizontal et que ledit dispositif de positionnement et de verrouillage (26) comprend un tenon (26) ayant une partie pratiquement horizontale (30) pour sa mise en place dans une ouverture inférieure du conteneur et une partie vertical (32) qui présente une ouverture (34) pour recevoir une broche (36) introduite à travers une ouverture de côté ou en bout du conteneur afin de verrouiller le tenon (26) dans l'ouverture inférieure.

2. Dispositif de roulement (10) pour son montage avec une ouverture d'angle d'un conteneur, comprenant un plateau (111) ayant un moyen venant au contact du sol (22, 100) accouplé à une face du plateau et un dispositif de positionnement de verrouillage (115) attaché à sa face opposée, caractérisé en ce que, dans la position active, le plateau (111) forme un plateau de base pratiquement horizontal et que ledit dispositif de positionnement et de verrouillage (115) comprend une plaque de positionnement (112) pour son logement dans une ouverture inférieur du conteneur et montée pour tourner par rapport au plateau de base (111) et une plaque de verrouillage (131) fixe par rapport au plateau de base (111) de sorte qu'on peut faire tourner ledit plateau de base pour faire tourner la plaque de verrouillage (131) par rapport à la plaque de positionnement (112) en verrouillant le dispositif de positionnement et de verrouillage (115) dans l'ouverture inférieure.

3. Dispositif de roulement selon la revendication 1 ou la revendication 2, dans lequel ledit moyen au contact du sol (22, 100) peut pivoter par rapport au dispositif de positionnement et de verrouillage (26, 115).

4. Dispositif de roulement selon la revendication 3, dans lequel le moyen au contact du sol (22, 100) est accouplé au plateau de base (12, 111) par un arbre pivotant (24, 118) qui traverse le plateau de base (12, 111).

5. Dispositif de roulement selon la revendication 4, dans lequel l'arbre (24, 118) est monté dans un palier (16, 117) disposé entre le plateau de base (12, 111) et le moyen venant au contact du sol (22, 100).

6. Dispositif de roulement selon l'une quelconque des revendications précédentes, dans lequel le moyen au contact du sol comprend une roue (22).

7. Dispositif de roulement selon la revendication 6, dans lequel la roue (22) est montée sur un axe entre deux joues (20) reliées entre elles par une plaque de montage (18) qui est accouplée au plateau de base (12, 111).

8. Dispositif de roulement selon l'une quelconque des revendications 1 à 5, dans lequel le moyen au contact du sol comprend un assemblage de rouleaux (100).

9. Dispositif de roulement selon la revendication 8, dans lequel l'assemblage de rouleaux comprend une pluralité de rouleaux (124 à 127) montés entre deux joues (122, 130) qui sont accouplées au plateau de base (111) par une plaque supérieur (123).

10. Dispositif de roulement selon la revendication 9, dans lequel les rouleaux (124 à 127) sont munis d'un chemin de roulement formant chenille.

## Patentansprüche

1. Fahreinrichtung (10) zur Montage an einer Eckausnehmung eines Containers, mit einer Platte (12), die mit dem Boden zusammenwirkende Einrichtungen (22), die an ihrer einen Seite angekuppelt sind, und eine Positionier- und Verriegelungsvorrichtung (26) hat, die an ihrer anderen Seite angebracht ist, dadurch gekennzeichnet, daß in der Betriebsposition die Platte (12) eine im wesentlichen horizontale Basisplatte bildet und die Positionier- und Verriegelungsvorrichtung (26) einen Ansatz (26) enthält, der einen im wesentlichen horizontalen Abschnitt (30) zur Aufnahme in einer Ausnehmung an der Unterseite des Containers und einen aufrecht stehenden Abschnitt (32) mit einer Öffnung (34) zur Aufnahme eines Stiftes (36) hat, der durch eine Seite oder End-Ausnehmung des Containers zur Verriegelung des Ansatzes (26) in der Ausnehmung an der Unterseite einführbar ist.

2. Fahreinrichtung (10) zur Montage an einer Eck-Ausnehmung eines Containers, mit einer Platte (111), die mit dem Boden zusammenwirkende Einrichtungen (22, 100), die an ihrer einen Seite angekuppelt sind und eine Positionier- und Verriegelungsvorrichtung (115) hat, die an ihrer anderen Seite angebracht ist, dadurch gekennzeichnet, daß in der Betriebsposition die Platte (111) eine im wesentlichen horizontale Basisplatte bildet und die Positionier- und Verriegelungsvorrichtung (115) eine in einer Ausnehmung an der Unterseite des Containers aufzunehmende und zur Relativdrehung gegenüber der Basisplatte (111) montierte Positionierplatte (112) und eine Verriegelungsplatte (131) enthält, die relativ zur Basisplatte (111) fixiert ist, so daß die Basisplatte (111) gedreht werden kann, um eine Drehung der Verriegelungsplatte (131) relativ zur der Positionierplatte (112) zu bewirken, um die Positionier- und Verriegelungsvorrichtung (115) in der Ausnehmung an der Unterseite zu verriegeln.

3. Fahreinrichtung nach Anspruch 1 oder 2, bei der die mit dem boden zusammenwirkende Einrichtung (22, 100) gegenüber der Positionier- und Verriegelungsvorrichtung (26, 115) schwenkbar ist.

4. Fahreinrichtung nach Anspruch 3, bei der die mit dem Boden zusammenwirkende Einrichtung (22, 100) mit der Basisplatte (12, 111) durch eine drehbare Welle (24, 118) gekuppelt ist, die durch die Basisplatte (12, 111) hindurch reicht.

5. Fahreinrichtung nach Anspruch 4, bei der die Welle (24, 118) in Lagerungseinrichtungen (16, 117) angebracht ist, die zwischen der Basisplatte (12, 111) und den mit dem Boden zusammenwirkenden Einrichtungen (22, 100) angeordnet sind.

6. Fahreinrichtung nach einem der vorhergehenden Ansprüche, bei der die mit dem Boden zusammenwirkenden Einrichtungen ein Rad (22) enthalten.

7. Fahreinrichtung nach Anspruch 6, bei der das Rad (22) auf einer Achse zwischen einem Paar Flanschen (20) angeordnet ist, die miteinander durch eine Befestigungsplatte (18) verbunden sind, die mit der Basisplatte (12, 111) gekuppelt ist.

8. Fahreinrichtung nach irgendeinem der Ansprüche 1 bis 5, bei der die mit dem Boden zusammenwirkenden Einrichtungen einen Rollensatz (100) enthalten.

9. Fahreinrichtung nach Anspruch 8, bei der der Rollensatz eine Mehrzahl von Rollen (124 bis 127) aufweist, die zwischen einem Paar Flanschen (122, 130) angebracht sind, wobei die Flanschen (122, 130) mit der Basisplatte (111) durch eine obere Platte (123) verbunden sind.

10. Fahreinrichtung nach Anspruch 9, bei der die Rollen (124 bis 127) mit einer Raupenkette versehen sind.

0 009 921

FIG. 1.

FIG. 2.

FIG. 3.

FIG. 4A.

FIG. 4B.

FIG. 5.

0 009 921

FIG. 7.

FIG. 8.

FIG. 10.

FIG. 9.

FIG. 6.

3